(19)

Europäisches
Patentamt
European
Patent Office
Office européen
des brevets

(11) **EP 2 187 189 B1**

(12) **EUROPEAN PATENT SPECIFICATION**

(45) Date of publication and mention
of the grant of the patent:
**15.01.2014 Bulletin 2014/03**

(51) Int Cl.:
***G01J 5/48*** (2006.01)

(21) Application number: **08828295.9**

(86) International application number:
**PCT/JP2008/064329**

(22) Date of filing: **08.08.2008**

(87) International publication number:
**WO 2009/028320 (05.03.2009 Gazette 2009/10)**

(54) **FAR INFRARED IMAGING APPARATUS, PHYSICAL QUANTITY DETECTION METHOD, AND OBSTACLE ESTIMATION APPARATUS AND METHOD**

VORRICHTUNG ZUR BILDGEBUNG IM FERNEN INFRAROTBEREICH, VERFAHREN ZUR DETEKTION EINER PHYSIKALISCHEN GRÖSSE UND VORRICHTUNG UND VERFAHREN ZUR HINDERNISSCHÄTZUNG

APPAREIL D'IMAGERIE INFRAROUGE LOINTAIN, PROCÉDÉ DE DÉTECTION DE QUANTITÉ PHYSIQUE ET APPAREIL ET PROCÉDÉ D'ESTIMATION D'OBSTACLE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **31.08.2007 JP 2007225731**

(43) Date of publication of application:
**19.05.2010 Bulletin 2010/20**

(73) Proprietor: **Kabushiki Kaisha Toyota Chuo Kenkyusho**
**Aichi-Gun**
**Aichi 480-1192 (JP)**

(72) Inventors:
• **FUJITSUKA, Norio**
**Aichi-gun, Aichi 480-1192 (JP)**

• **SHIMAOKA, Keiichi**
**Aichi-gun, Aichi 480-1192 (JP)**
• **NINOMIYA, Yoshiki**
**Aichi-gun, Aichi 480-1192 (JP)**

(74) Representative: **Kramer - Barske - Schmidtchen**
**Landsberger Strasse 300**
**80687 München (DE)**

(56) References cited:
**EP-A1- 0 623 811    JP-A- 03 028 728**
**JP-A- 07 099 608    JP-A- 2004 157 009**

• **HEISEI 17 NEN THE INSTITUTE OF ELECTRICAL ENGINEERS OF JAPAN ZENKOKU TAIKAI KOEN RONBUNSHU, 2005 ANNUAL MEETING RECORD I.E.E. JAPAN no. 3, 17 March 2005, pages 3.S26 (18) - 3/S26(21)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## TECHNICAL FIELD

The present invention relates to a far-infrared imaging device, a physical quantity detection method, and an obstacle estimation device and method.

## BACKGROUND ART

Conventionally, there has been disclosed a technology that uses a thermoelectric converter or a photoelectric converter that converts a quantity of energy radiated from a target-to-be-detected and utilizes the output of this converter to estimate emissivity and radiation temperature (see Japanese Patent Application Laid-Open (JP-A) No. 62-9238).

According to JP-A No. 62-9238, a bowl type surface thermometer, a two-color thermometer system and an optical fiber radiation thermometer have conventionally been known as emissivity measurement methods. However, in the case of the bowl type surface thermometer, there is the problem that the bowl type surface thermometer cannot perform continuous measurement because it is necessary to bring the bowl type surface thermometer into contact with an object-to-be-measured and stop the measurement target. Further, in the case of the two-color thermometer system, there is the problem that when energy of one wavelength is absorbed by water vapor or the like in the atmosphere, error becomes larger when the emissivity ratio changes and the gray condition collapses. Moreover, in the case of the optical fiber radiation thermometer, there is the problem that measurement precision is determined by the precision of an approximate function of emissivity, so the amount of deviation from the approximate function resulting from a change in the surface texture of an object becomes error.

Thus, in JP-A No. 62-9238, an emissivity and radiation temperature estimation method is disclosed in order to address this problem. The technology of JP-A No. 62-9238 performs temperature measurement of an object-to-be-measured using plural radiation thermometers whose measurement wavelength bands have been selected such that a difference emerges in effective emissivity, corrects the temperatures of temperature signals from the thermometers with a preset coefficient of emissivity, performs temperature conversion of each with the temperature signals after correction, performs an operation that modifies the coefficient of emissivity until the temperature difference between each becomes extremely small, uses, as the true emissivity of the measurement target, the coefficient of emissivity where the temperature difference between each becomes extremely small that has been obtained by the operation, and uses, as the temperature of the measurement target, the temperature that is determined from the temperature signal after correction with the true emissivity.

EP 0 623 811 A1 relates to contactless measuring of a surface temperature and/or an emissivity of objects based on scanning the infrared radiation coming out of the object by means of, at least, two detectors of infrared radiation.

## DISCLOSURE OF THE INVENTION

<Problem that the Invention is to Solve>

Incidentally, the technology of JP-A No. 62-9238 has had the problem that its operation burden is large because it is necessary to perform temperature correction and the operation that modifies the coefficient of emissivity until the temperature difference between each becomes extremely small.

Further, as a device that can measure emissivity with relatively good precision, there is an analyzing device that sets a sample of an object on a sample stage, applies light of a wavelength that one wants to measure, measures transmission and reflection intensity, and calculates the emissivity with those results. However, this analyzing device has had the problem that it cannot continuously measure a movable object and its versatility and usability are poor because the sizes, shapes and temperature ranges of samples it is capable of measuring are limited.

The present invention has been proposed in order to solve the problem described above.

<Solution to the Problem>

An obstacle estimation device according to the invention is described in claim 1.

An obstacle estimation method according to the invention is described in claim 3.

<Advantageous Effects of the Invention>

The far-infrared imaging device and the physical quantity detection method of the current application can calculate at least one of the emissivity and the temperature of an obstacle without contact, simply and conveniently, and with high precision.

The obstacle estimation device and method pertaining to the present invention can estimate an obstacle simply and conveniently and with high precision.

## BRIEF DESCRIPTION OF THE DRAWINGS

FIG. 1 is a diagram showing examples of emissivities;
FIG. 2 is a diagram showing the configuration of a temperature detection device pertaining to a first example;
FIG. 3 is a diagram showing the configuration of a temperature detection device that uses two far-infrared image sensors; and
FIG. 4 is a diagram showing the configuration of an obstacle estimation device pertaining to a second example.

## BEST MODES FOR CARRYING OUT THE INVENTION

Preferred embodiments of the present invention will be described in detail below with reference to the drawings.

[Principle of the Invention]

All objects equal to or greater than absolute zero emit far-infrared radiation in accordance with the Stefan-Boltzmann law. A black body, whose emissivity is 1.0, gives off radiant energy of expression (1) below, and all other objects give offradiant energy multiplied by the emissivity of the object surface as in expression (2).

$$E = \sigma T^4 \ [W/m^2] \qquad \cdots (1)$$

$$E = \varepsilon \sigma T^4 \ [W/m^2] \qquad \cdots (2)$$

$\sigma$ = Stefan-Boltzmann constant 5.67e-8 [W/m$^2$ K]
$\varepsilon$ = emissivity (0 to 1.0)
$T$ = temperature [K]

A thermal type far-infrared camera converts minute temperature changes resulting from radiant energy absorption from these objects into electrical signals to image the temperature changes. Here, the objects have different emissivities depending on their respective materials, colors, surface states, etc.

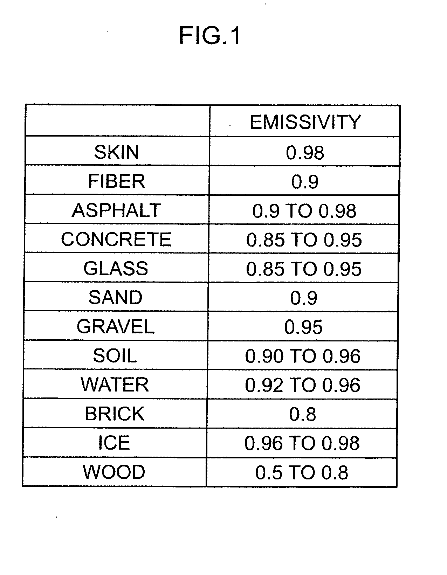

FIG. 1 is a diagram showing examples of emissivities. For example, skin has a value of 0.98, asphalt has a value of 0.9 to 0.98, fiber has a value of 0.9, and brick has a value of 0.8. Further, even with the same materials, their color, surface unevenness/planarity and rate of absorption become different values.

Usually, a far-infrared camera that is capable of contactless temperature measurement performs isothermal control of its imaging element with a Peltier element at around 27°C (300 K). This is because the camera cannot output a stable measurement and temperature information when the change in the temperature of the light-receiving portion of the sensor resulting from far-infrared radiation from an object is extremely small, or about 1 mK, and the temperature of the substrate serving as the escape route of the heat generated by far-infrared radiation absorption is not stable.

In a far-infrared camera, heat conversion given by expression (3) which follows is performed between the subject and the sensor, and a thermal image is generated by electrical signals corresponding to this radiation conversion quantity.

$$q_{12} = \varphi_{12}\varepsilon_1\varepsilon_2\sigma(T_1^4 - T_2^4) \ [W/m^2] \qquad \cdots (3)$$

$q_{12}$ = entire radiation conversion quantity [W/m$^2$]
$\varphi_{12}$ = view factor of facet $S_2$ seen from microfacet $dS_1$
$\varepsilon_1$ = emissivity (0 to 1.0) of object 1 (subject)
$\varepsilon_2$ = emissivity of object 2 (sensor)

$T_1$ = temperature of object 1 (subject)
$T_2$ = temperature of object 2 (sensor)

As will be understood from expression (3), sometimes radiation conversion quantities becomes the same even in objects whose emissivities and temperatures are different, as in expression (4) which follows.

$$q_{12} = \varphi_{12}\varepsilon_{1a}\varepsilon_2\sigma(T_{1a}{}^4 - T_2{}^4)$$
$$= \varphi_{12}\varepsilon_{1b}\varepsilon_2\sigma(T_{1b}{}^4 - T_2{}^4)$$
$$\therefore$$
$$\varepsilon_{1a}(T_{1a}{}^4 - T_2{}^4) = \varepsilon_{1b}(T_{1b}{}^4 - T_2{}^4) \qquad \cdots (4)$$

$\varepsilon_{1a}$ = emissivity of object A
$T_{1a}$ = temperature of object A
$\varepsilon_{1b}$ = emissivity of object B
$T_{1b}$ = temperature of object B

That is, sometimes even objects whose emissivities and temperatures are different end up having the same brightness on a thermal image.

Conversely, as in expression (5), objects whose emissivities are different even if those objects have the same temperature are regarded as having different temperatures by a far-infrared camera and end up being appearing with different brightnesses.

$$q_{12} = \varphi_{12}\varepsilon_{1a}\varepsilon_2\sigma(T_1{}^4 - T_2{}^4)$$
$$\neq \varphi_{12}\varepsilon_{1b}\varepsilon_2\sigma(T_1{}^4 - T_2{}^4)$$
$$\therefore$$
$$\varepsilon_{1a}(T_1{}^4 - T_2{}^4) \neq \varepsilon_{1b}(T_1{}^4 - T_2{}^4) \qquad \cdots (5)$$

In this manner, a far-infrared sensor and a far-infrared camera that can measure temperature without contact cannot perform accurate temperature measurement when the accurate emissivity of an object is not known.

In order to perform high-precision contactless temperature measurement, a far-infrared camera has performed high-precision contactless temperature measurement by blackening an object by spraying a black spray onto the object and setting the emissivity of the far-infrared camera to an emissivity (e.g., 0.97 or the like) resulting from the black spray. In this case, it is necessary to paint the object black for measurement, and there has been the problem that the object cannot be returned to its original state after measurement.

Further, objects have respectively different emissivities, but a conventional far-infrared camera regards all objects as having a constant emissivity, generates a thermal image and performs temperature calculation, so there has been the problem that a conventional far-infrared camera cannot provide accurate temperature information.

If this emissivity can be accurately detected, accurate contactless temperature measurement and accurate thermal image display become possible. Moreover, objects have material-unique emissivities, so it becomes possible to estimate the material of an object from its emissivity.

[First Example]

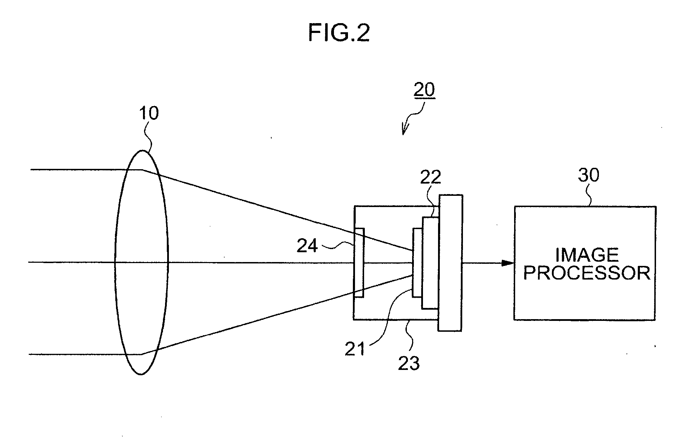

FIG. 2 is a diagram showing the configuration of a far-infrared imaging device pertaining to a first example. The far-infrared imaging device is equipped with a far-infrared lens 10 that collects far-infrared light, a far-infrared image sensor 20 that generates a thermal image corresponding to the temperature of an imaging target object, and an image processor 30 that performs image processing on the basis of the far-infrared image to detect temperature.

The far-infrared image sensor 20 is equipped with a far-infrared image sensor substrate 21 that generates a thermal image in accordance with light rays from a subject and a temperature controller 22 that controls the temperature of the far-infrared image sensor substrate 21 in a state where it is adhered to the far-infrared image sensor substrate 21.

The temperature controller 22 can control the substrate temperature of the far-infrared image sensor substrate 21 and is, for example, configured by a Peltier element. It will be noted that the temperature controller 22 is not limited to a Peltier element and may also be a Stirling cooler or heater. In the present embodiment, the temperature controller 22 initially controls the substrate temperature of the far-infrared image sensor substrate 21 to be $T_{2a}$ and subsequently controls the substrate temperature of the far-infrared image sensor substrate 21 to be $T_{2b}$.

The far-infrared image sensor 20 is also equipped with a vacuum-sealed package 23 that places in a vacuum state and seals the area around the far-infrared image sensor substrate 21 such that it is not affected by ambient temperature and a far-infrared transmissive window 24 that is disposed in an open portion of the vacuum-sealed package 23, transmits far-infrared radiation from a subject and allows the far-infrared radiation to be made incident on a light receiving surface of the far-infrared image sensor substrate 21.

The image processor 30 is equipped with a CPU, a ROM, a RAM and the like that are not shown and detects temperature on the basis of the thermal image that has been generated by the far-infrared image sensor 20 in a state where a predetermined substrate temperature has been reached.

The far-infrared imaging device configured as described above calculates, in the following manner, the temperature of an object from a temperature change resulting from far-infrared radiation that is radiated from the object. First, between the object and the sensor, the temperature of the object is calculated from the radiation heat conversion quantity given by expression (6) which follows.

$$q_{12} = \varphi_{12}\varepsilon_1\varepsilon_2\sigma(T_1^4 - T_2^4)\ [\text{W/m}^2] \qquad \cdots (6)$$

$q_{12}$ = entire radiation conversion quantity [W/m$^2$]
$\varphi_{12}$ = view factor of facet $S_2$ seen from microfacet $dS_1$
$\varepsilon_1$ = emissivity (0 to 1.0) of object 1 (subject)
$\varepsilon_2$ = emissivity of object 2 (sensor)
$T_1$ = temperature of object 1 (subject)
$T_2$ = temperature of object 2 (sensor)

That is, in order to calculate the temperature of the object, the view factor, the emissivity of the object, the emissivity of the sensor and the temperature of the sensor become necessary.

In expression (6), $\varphi_{12}$ is the view factor determined by the positional relationship between the object and the sensor—that is, a constant. $\varepsilon_2$ is the emissivity of the sensor—that is, a constant. $\sigma$ is the Stefan-Boltzmann constant-that is, a constant. Therefore, the radiation heat conversion quantity becomes expression (7) which follows.

$$q_{12} \propto \varepsilon_1(T_1^4 - T_2^4) = A \bullet \varepsilon_1(T_1^4 - T_2^4) \qquad \cdots (7)$$

From $q_{12}$ of expression (7), the temperature $T_1$ of the object is calculated as the emissivity $\varepsilon_1$. Further, if it is not the correct emissivity, the correct temperature cannot be calculated. Here, a case will be considered where the emissivity $\varepsilon_1$ and the temperature $T_1$ of the object are unknown. In the case of sensor temperature $T_{2a}$, the radiation heat conversion quantity becomes expression (8).

$$q_{12a} = A \bullet \varepsilon_1(T_1^4 - T_{2a}^4) \qquad \cdots (8)$$

Similarly, in the case of sensor temperature $T_{2b}$, the radiation heat conversion quantity becomes expression (9).

$$q_{12b} = A \bullet \varepsilon_1(T_1^4 - T_{2b}^4) \qquad \cdots (9)$$

It will be noted that $q_{12a}$ and $q_{12b}$ are the output of each pixel configuring the thermal image that has been generated by the far-infrared image sensor 20 when the sensor temperature is $T_{2a}$ and $T_{2b}$. Thus, the image processor 30 can calculate the accurate emissivity $\varepsilon_1$ and temperature $T_1$ of the object by using the output $q_{12a}$ and $q_{12b}$ of the far-infrared image sensor 20 when the sensor temperature is $T_{2a}$ and $T_{2b}$ and solving the simultaneous equations of expressions (8) and (9). The emissivity $\varepsilon_1$ and the temperature $T_1$ are calculated per pixel of the thermal image that has been generated by the far-infrared image sensor 20. Further, the emissivity $\varepsilon_1$ of the object is determined by expression (10).

$$\varepsilon_1 \quad = q_{12a}/\{A \bullet (T_1^4 - T_{2a}^4)\}$$
$$= q_{12b}/\{A \bullet (T_1^4 - T_{2b}^4)\} \qquad \cdots (10)$$

As described above, the far-infrared imaging device pertaining to the first embodiment sets the substrate temperature of the far-infrared image sensor 20 to $T_{2a}$ and $T_{2b}$ and can detect the accurate emissivity $\varepsilon_1$ without contacting the object on the basis of the output $q_{12a}$ and $q_{12b}$ of the far-infrared image sensor 20 at those times. Further, the far-infrared imaging device is also capable of detecting the accurate temperature $T_1$ of the object by using the accurate emissivity $\varepsilon_1$ that has been detected. It will be noted that the configuration of the far-infrared imaging device is not limited to FIG. 2 and may also be the following configuration.

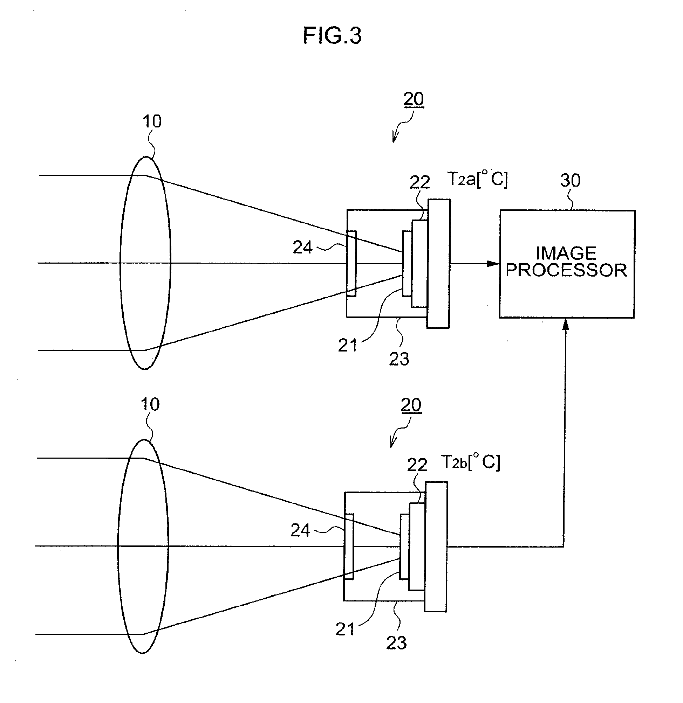

FIG. 3 is a diagram showing the configuration of a far-infrared imaging device that uses two of the far-infrared image sensors 20. It will be noted that the substrate temperature of one of the far-infrared image sensors 20 is set to $T_{2a}$ and the substrate temperature of the other of the far-infrared image sensors 20 is set to $T_{2b}$. The image processor 30 detects the emissivity $\varepsilon_1$ and the temperature $T_1$ of the object by using the output of the two far-infrared image sensors 20 and solving the simultaneous equations of expressions (8) and (9). As a result, the far-infrared imaging device can dispense with modulation of the substrate temperature by using the two far-infrared image sensors 20 and can perform detection of the emissivity $\varepsilon_1$ and the temperature $T_1$ of the object in a short amount of time.

[Second Example]

Next, a second embodiment of the present invention will be described. It will be noted that the same reference numerals will be given to portions that are the same as those in the first embodiment and that portions differing from those in the first embodiment will mainly be described.

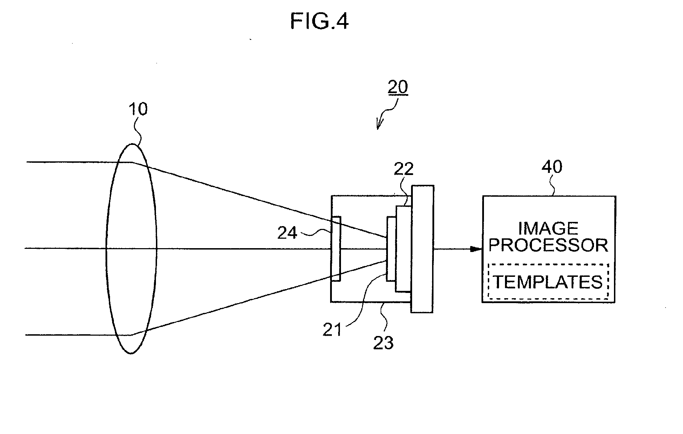

FIG. 4 is a diagram showing the configuration of an obstacle estimation device pertaining to a second example. The obstacle estimation device is equipped with a far-infrared lens 10 that collects far-infrared light, a far-infrared image sensor 20 that generates a thermal image corresponding to the temperature of an imaging target object, and an image processor 40 that performs image processing on the basis of the far-infrared image to estimate an obstacle.

The image processor 40 can detect the emissivity $\varepsilon_1$ and the temperature $T_1$ of an object in the same manner as the image processor 30 of the first example and can also estimate what the object is.

Here, the image processor 40 stores various templates that represent shapes of objects serving as detection targets. Examples of the templates include objects serving as detection targets, such as pedestrians, motorcycles and vehicles, or falling objects such as cardboard, rock or concrete.

Additionally, the image processor 40 calculates the emissivity of an object in the same manner as in the first example and also performs matching processing of an object appearing in the thermal image generated by the far-infrared image sensor 20 and the various templates. Thereafter, the image processor 40 can estimate what the material of the object is and what that object is on the basis of the template (the shape of the object) it has matched and the emissivity of the object. Specifically, the image processor 40 can estimate the material of each portion of the object and also that entire object by considering the shape of the object and the emissivity distribution of each pixel inside that shape.

In particular, road surfaces and outer walls do not always appear with uniform brightness because of their material, the way the sun strikes them, and unevenness. Similarly, pedestrians also do not appear with uniform brightness because of their clothing, how many layers of clothing there are, the way heat travels from their bodies, the way the sun strikes them, and the way the wind blows, and pedestrians appear with different brightnesses per region of the body. In this manner, both backgrounds and pedestrians do not always have uniform brightness but rather have variations, so there is a problem in the detection precision of an object with just emissivity.

Thus, the obstacle estimation device detects not only the emissivity of the object it has detected without contact but also accurately detects the material of the object by considering the shape of that object, so that the obstacle estimation device can reliably detect what that object is. For this reason, a safe driving system in which the obstacle estimation device has been installed can take appropriate measures on the basis of an obstacle that has been detected. For example, a safe driving system can judge, before colliding with an obstacle, whether or not colliding with the obstacle or running over the obstacle is necessary or whether or not evasive action is necessary, such as collision avoidance resulting from airbag deployment, bonnet lift, seatbelt pretension, headrest movement, brake operation or steering wheel operation, and can realize appropriate measures.

Further, the obstacle estimation device according to the invention, in the same manner as in FIG. 3, uses two or more of the far-infrared image sensors 20. In this case, it suffices to dispose the image processor 40 instead of the image processor 30 shown in FIG. 3. Moreover, the image processor 40 may also detect distance information to an object using a stereo camera or a millimeter-wave radar and estimate an obstacle considering the size of the object from this distance information and shape information.

For example, the substrate temperature is freely settable, and the substrate temperature is not limited to being set in the two stages of $T_{2a}$ and $T_{2b}$ and may also be set in three or more stages. Moreover, when there are two of the far-infrared image sensors 20, the substrate temperature was fixed respectively at $T_{2a}$ and $T_{2b}$, but the substrate temperature may also be modulated to two or more values where the phase is the same and where the median values of sine waves, rectangular waves or Δ waves are different.

In the examples described above, an object has been taken as an example and described as the obstacle, but the obstacle may also be a pedestrian or a motorcycle rider or may also be a puddle of water, snow, or an icy road surface.

Further, the obstacle estimation device described above estimated an obstacle using a template matching technique, but it may also estimate an obstacle using a thermal image density histogram or may use a technique that combines these. Moreover, the obstacle estimation device may also estimate an obstacle having a specific size and aspect ratio on the basis of shape characteristics or may detect a pedestrian that is one obstacle from partial characteristics such as the head and shoulders.

## EXPLANATION OF THE REFERENCE NUMERALS

| | |
|---|---|
| 10 | Far-Infrared Lens |
| 20 | Far-Infrared Image Sensor |
| 30, 40 | Image Processors |

## Claims

1. An obstacle estimation device comprising:

    a plurality of imaging elements (20) that generate images corresponding to far-infrared radiation from an obstacle;
    a temperature controller (22) that controls the imaging elements (20) to be at respectively different temperatures $(T_{2a}, T_{2b})$;
    a detector that detects the emissivity $(\varepsilon_1)$ of the obstacle on the basis of the output $(q_{12a}, q_{12b})$ of the images that have been generated by the imaging element (20) in a state where the imaging elements (20) have been controlled to be at the different temperatures $(T_{2a}, T_{2b})$ by the temperature controller (22) such that $q_{12a} = A \cdot \varepsilon_1 (T_1^4 - T_{2a}^4)$ and $q_{12b} = A \cdot \varepsilon_1 (T_1^4 - T_{2b}^4)$, wherein A is a constant and $T_1$ is the temperature of the obstacle
    an obstacle estimator that estimates the obstacle on the basis of the emissivity $(\varepsilon_1)$ of the obstacle that has been detected by the detector and the shape of the obstacle that appears in the images that have been generated by the imaging elements (20).

2. The obstacle estimation device according to claim 1, further comprising a distance detector that detects the distance to the obstacle, wherein the obstacle estimator further uses the distance that has been detected by the distance detector to estimate the obstacle.

3. An obstacle estimation method comprising:

    controlling a plurality of imaging elements (20) that generate images corresponding to far-infrared radiation from an obstacle to be at respectively different temperatures $(T_{2a}, T_{2b})$;
    detecting the emissivity $(\varepsilon_1)$ of the obstacle on the basis of the output $(q_{12a}, q_{12b})$ of the images that have been generated by the imaging elements (20) in each state where the imaging elements (20) have been controlled to be at the different temperatures $(T_{2a}, T_{2b})$ such that $q_{12a} = A \cdot \varepsilon_1 (T_1^4 - T_{2a}^4)$ and $q_{12b} = A \cdot \varepsilon_1 (T_1^4 - T_{2b}^4)$, wherein A is a constant and $T_1$ is the temperature of the obstacle
    estimating the obstacle on the basis of the emissivity $(\varepsilon_1)$ of the obstacle that has been detected and the shape of the obstacle that appears in the images that have been generated by the imaging elements (20).

4. The obstacle estimation method according to claim 3, further comprising
detecting the distance to the obstacle, wherein the method further uses the distance that has been detected to estimate the obstacle.

**Patentansprüche**

1. Hindernisschätzvorrichtung, enthaltend:

    eine Mehrzahl von Bildgebungsteilen (20), die Bilder entsprechend einer langwelligen Infrarotstrahlung von einem Hindernis erzeugen;
    eine Temperatursteuerung (22), die die Bildgebungsteile (20) auf jeweils unterschiedliche Temperaturen ($T_{2a}$, $T_{2b}$) steuert;
    einen Detektor, der das Emissionsvermögen ($\varepsilon 1$) des Hindernisses basierend auf der Ausgabe ($q_{12a}$,$q_{12b}$) der Bilder detektiert, die von dem Bildgebungsteil (20) erzeugt worden sind, in einem Zustand, bei dem die Bildgebungsteile (20) auf die unterschiedlichen Temperaturen ($T_{2a}$, $T_{2b}$) von der Temperatursteuerung (22) gesteuert worden sind, so dass $q_{12a}= A \cdot \varepsilon_1 (T_1^4 - T_{2a}^4)$ und $q_{12b} = A \cdot \varepsilon_1 (T_1^4 - T_{2b}^4)$ sind, wobei A eine Konstante ist und $T_1$ die Temperatur des Hindernisses ist, und
    einen Hindernisschätzer, der das Hindernis basierend auf dem Emissionsvermögen ($\varepsilon_1$) des Hindernisses, das von dem Detektor detektiert worden ist, und der Form des Hindernisses, die in den Bildern erscheint, die von den Bildgebungsteilen (20) erzeugt worden sind, schätzt.

2. Hindernisschätzvorrichtung nach Anspruch 1, ferner enthaltend einen Abstandsdetektor, der den Abstand zu dem Hindernis detektiert, wobei der Abstandsschätzer ferner den Abstand verwendet, der von dem Abstandsdetektor detektiert worden ist, um das Hindernis zu schätzen.

3. Hindernisschätzverfahren mit:

    Steuern einer Mehrzahl von Bildgebungsteilen (20), die Bilder erzeugen entsprechend einer langwelligen Infrarotstrahlung von einem Hindernis, um auf jeweils unterschiedlichen Temperaturen ($T_{2a}$, $T_{2b}$) zu sein;
    Detektieren des Emissionsvermögens ($\varepsilon_1$) des Hindernisses basierend auf der Ausgabe ($q_{12a}$, $q_{12b}$) der Bilder, die von den Bildgebungsteilen (20) erzeugt worden sind, in jedem Zustand, bei dem die Bildgebungsteile (20) auf die unterschiedlichen Temperaturen ($T_{2a}$, $T_{2b}$) gesteuert worden sind, so dass $q_{12}a= A \cdot \varepsilon_1 (T_1^4 - T_{2a}^4)$ und $q_{12b} = A \cdot \varepsilon_1 (T_1^4 - T_{2b}^4)$ sind, wobei A eine Konstante ist und T1 die Temperatur des Hindernisses ist; und
    Schätzen des Hindernisses basierend auf dem Emissionsvermögen ($\varepsilon 1$) des Hindernisses, das detektiert worden ist, und der Form des Hindernisses, die in den Bildern erscheint, die von den Bildgebungsteilen (20) erzeugt worden sind.

4. Hindernisschätzverfahren nach Anspruch 3, ferner mit
    Detektieren des Abstands zu dem Hindernis, wobei das Verfahren ferner den Abstand, der detektiert worden ist, verwendet, um das Hindernis zu schätzen.

**Revendications**

1. Un appareil d'estimation d'obstacles comprenant :

    une pluralité d'éléments d'imagerie (20) qui génèrent des images correspondant au rayonnement d'infrarouges lointains d'un obstacle ;
    un régulateur de température (22) qui contrôle les éléments d'imagerie (20) de sorte qu'ils soient respectivement à différentes températures (T2a, T2b) ;
    un détecteur qui détecte le pouvoir émissif ($\varepsilon 1$) de l'obstacle sur base du signal de sortie (q12a, q12b) des images qui ont été générées par l'élément d'imagerie (20) dans une situation dans laquelle les éléments d'imagerie (20) ont été contrôlés de sorte à être aux températures différentes (T2a, T2b) par le régulateur de température (22) de façon à ce que $q12a = A \cdot \varepsilon 1 (T1^4 - T2a^4)$ et $q12b = A \cdot \varepsilon 1 (T1^4 - T2b^4)$, où A représente une constante et T1 représente la température de l'obstacle ;
    un estimateur d'obstacles qui estime l'obstacle sur la base du pouvoir émissif ($\varepsilon 1$) de l'obstacle qui a été détecté par le détecteur et de la forme de l'obstacle telle qu'elle apparaît sur les images générées par les éléments d'imagerie (20).

**2.** L'appareil d'estimation d'obstacles selon la revendication 1, comprenant en outre un détecteur de distance qui détecte la distance jusqu'à l'obstacle, dans lequel l'estimateur d'obstacle utilise en outre la distance qui a été détectée par le détecteur de distance pour estimer l'obstacle.

**3.** Une méthode d'estimation d'obstacles comprenant :

une étape de contrôle d'une pluralité d'éléments d'imagerie (20) qui génèrent des images correspondant au rayonnement d'infrarouges lointains d'un obstacle pour qu'elles soient respectivement à différentes températures (T2a, T2b);

une étape de détection du pouvoir émissif ($\varepsilon 1$) de l'obstacle sur base du signal de sortie (q12a, q12b) des images qui ont été générées par l'élément d'imagerie (20) dans une situation dans laquelle les éléments d'imagerie (20) ont été contrôlés de sorte à être aux températures différentes (T2a, T2b) par le régulateur de température (22) de façon à ce que $q12a = A \cdot \varepsilon 1 (T1^4 - T2a^4)$ et $q12b = A \cdot \varepsilon 1 (T1^4 - T2b^4)$, où A représente une constante et T1 représente la température de l'obstacle ;

une étape d'estimation de l'obstacle sur base du pouvoir émissif ($\varepsilon 1$) de l'obstacle qui a été détecté par le détecteur et de la forme de l'obstacle telle qu'elle apparaît sur les images générées par les éléments d'imagerie (20).

**4.** La méthode d'estimation d'obstacles selon la revendication 3, comprenant en outre une étape de détection de la distance jusqu'à l'obstacle, dans laquelle la méthode utilise en outre la distance qui a été détectée par le détecteur de distance pour estimer l'obstacle.

## FIG.1

| | EMISSIVITY |
|---|---|
| SKIN | 0.98 |
| FIBER | 0.9 |
| ASPHALT | 0.9 TO 0.98 |
| CONCRETE | 0.85 TO 0.95 |
| GLASS | 0.85 TO 0.95 |
| SAND | 0.9 |
| GRAVEL | 0.95 |
| SOIL | 0.90 TO 0.96 |
| WATER | 0.92 TO 0.96 |
| BRICK | 0.8 |
| ICE | 0.96 TO 0.98 |
| WOOD | 0.5 TO 0.8 |

FIG.2

# FIG.3

FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62009238 A

- EP 0623811 A1